(19) **Europäisches Patentamt**
**European Patent Office**
**Office européen des brevets**

(11) **EP 4 748 958 A1**

(12) **EUROPEAN PATENT APPLICATION**
published in accordance with Art. 153(4) EPC

(43) Date of publication:
27.05.2026 Bulletin 2026/22

(21) Application number: 24843100.9

(22) Date of filing: 12.07.2024

(51) International Patent Classification (IPC):
$C22C\ 38/00^{(2006.01)}$    $B23K\ 11/16^{(2006.01)}$
$C21D\ 9/46^{(2006.01)}$    $C22C\ 38/58^{(2006.01)}$

(52) Cooperative Patent Classification (CPC):
B23K 11/16; C21D 9/46; C22C 38/00; C22C 38/58

(86) International application number:
PCT/JP2024/025325

(87) International publication number:
WO 2025/018310 (23.01.2025 Gazette 2025/04)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 18.07.2023 JP 2023116972

(71) Applicant: Nippon Steel Corporation
Tokyo 100-8071 (JP)

(72) Inventors:
• **FURUKAWA, Noriyuki**
**Tokyo 100-8071 (JP)**
• **MITSUNOBU, Takuya**
**Tokyo 100-8071 (JP)**
• **OKE, Takashi**
**Tokyo 100-8071 (JP)**

(74) Representative: **Vossius & Partner**
**Patentanwälte Rechtsanwälte mbB**
**Siebertstraße 3**
**81675 München (DE)**

(54) **WELDED JOINT AND JOINING STRUCTURE OF AUTOMOBILE MEMBER**

(57) The present invention has as its technical issue the provision of a welded joint suppressing LME at the time of production. The welded joint of the present invention is a welded joint comprising a plurality of steel sheets overlaid and a spot weld joining the plurality of steel sheets, in which welded joint, the spot weld has a nugget, an indentation, and a weld shoulder part, at least one of the steel sheets among the plurality of steel sheets is a plated steel sheet, at least one of the steel sheets forming the overlaid surface among the plurality of steel sheets is a high strength steel sheet having a predetermined chemical composition, in a first region, a surface roughness Ra of the high strength steel sheet is more than 3.0 $\mu$m, a depth in a thickness direction from the surface of the high strength steel sheet wherein a C concentration is 0.02% or less is 8 $\mu$m or more, in grazing incidence X-ray diffraction with an incidence angle of 1° with respect to the surface of the high strength steel sheet, $0.45 \le I(110) / ( I(110) + I(200) + I(211) ) \le 0.90$ is satisfied, when I(110) denotes a diffraction intensity corresponding to the (110) plane, I(200) denotes a diffraction intensity corresponding to the (200) plane, and I(211) denotes a diffraction intensity corresponding to the (211) plane, and, in a second region of the high strength steel sheet, a thickness in a thickness direction from the surface of the high strength steel sheet of a layer having an area ratio of ferrite of 90% or more is 15 $\mu$m or more.

Fig. 2

(a)      (b)

**Description**

FIELD

The present invention relates to a welded joint and a welded structure of automobile members. More specifically, the present invention relates to a welded joint inhibiting LME cracking at the time of production and a joined structure of automobile members.

BACKGROUND

In recent years, the steel sheet used in automobiles, home electric appliances, building materials, and other various fields has been made increasingly higher in strength. For example, in the automobile field, use of welded joints obtained by spot welding high strength steel sheet has been increasing with the aim of lightening the weight of car bodies so as to improve fuel efficiency.

In welding galvanized steel sheet, in particular high strength (high tensile strength and hardness) steel sheet, for example as described in PTL 1, liquid metal embrittlement (LME) cracking sometimes causes the weldability to fall.

Note that, PTL 2 discloses steel sheet suppressed in LME cracking to improve weldability wherein the surface layer part of the steel sheet has size 20 nm or more Si oxide grains present in a 3000 to 6000/mm$^2$ number density by a suitable particle size distribution.

[CITATION LIST]

[PATENT LITERATURE]

   [PTL 1] WO2019/116531
   [PTL 2] WO2020/218575

SUMMARY

[TECHNICAL PROBLEM]

At the time of production of a welded joint, to suppress the occurrence of LME cracking, for example, it is effective to keep the Zn etc. contained in a plating layer from penetrating steel sheet with a microstructure transformed to austenite at the time of welding. There is room for improvement on this point.

The present invention, in consideration of such a situation, has as its technical problem the provision of a welded joint inhibiting LME cracking at the time of production.

[SOLUTION TO PROBLEM]

The inventors engaged in intensive studies on means for solving the above technical problem. As a result, they discovered that by imparting strain to steel sheet before annealing by a blasting material under suitable conditions to render it a suitable surface condition and annealing it by a high dew point, the surface layer of the steel sheet is decarburized and further a layer with a high ferrite fraction where the ferrite is randomly oriented is formed and, therefore, as a result, it becomes possible to suppress LME.

The present invention was made based on the above discovery and further by additional study. Its gist is as follows:

(1) A welded joint comprising a plurality of steel sheets which are overlaid and a spot welded part joining the plurality of steel sheets, wherein the spot welded part has a nugget, an indentation part squeezed by electrodes, and a weld shoulder part which is a periphery part of the indentation part, at least one of the steel sheets among the plurality of steel sheets is a plated steel sheet having a plating layer comprising Zn formed on at least the surface corresponding to an overlaid surface of the plurality of steel sheets, at least one of the steel sheets forming the overlaid surface among the plurality of steel sheets is a high strength steel sheet having a hardness of 200 Hv or more at a first region which is a surface layer region at 5 mm or more away from an outer end of the nugget toward the outer side of the nugget in the directions of spread of the sheet surface of the steel sheet, a chemical composition of the high strength steel sheet comprises, by mass%, C: 0.05 to 0.40%, Si: 0.5 to 3.0%, Mn: 0.1 to 5.0%, sol.Al: 0 to 3.0%, P: 0.0300% or less, S:

0.0300% or less, N: 0.0100% or less, B: 0 to 0.0100%, Ti: 0 to 0.1500%, Nb: 0 to 0.150%, V: 0 to 0.150%, Cr: 0 to 2.00%, Ni: 0 to 2.00%, Cu: 0 to 2.0000%, Mo: 0 to 1.00%, W: 0 to 1.000%, Ca: 0 to 0.1000%, Mg: 0 to 0.100%, Zr: 0 to 0.100%, Hf: 0 to 0.100%, REM: 0 to 0.1000% and a balance comprising Fe and impurities; in the first region, a surface roughness Ra of the high strength steel sheet is more than 3.0 $\mu$m, a depth in a thickness direction from the surface of the high strength steel sheet wherein a C concentration is 0.02% or less is 8 $\mu$m or more, in grazing incidence X-ray diffraction with a incidence angle of 1° with respect to the surface of the high strength steel sheet, $0.45 \leq I(110) / ( I(110) + I(200) + I(211) ) \leq 0.90$ is satisfied, when I(110) denotes a diffraction intensity corresponding to the (110) plane, I(200) denotes a diffraction intensity corresponding to the (200) plane, and I(211) denotes a diffraction intensity corresponding to the (211) plane; and in a second region which is a surface layer region at a distance of 0 to 100 $\mu$m away from the weld shoulder part toward the outside of the spot welded part in the directions of spread of the sheet surface of the high strength steel sheet, a thickness in a thickness direction from the surface of the high strength steel sheet of a layer having an area ratio of ferrite of 90% or more is 15 $\mu$m or more, where, when the steel sheet is the plated steel sheet, the surface of the steel sheet is deemed to be the interface of the steel sheet and the plating layer of the plated steel sheet.

(2) The welded joint according to (1), wherein, in the first region, $0.50 \leq 1(110) / ( 1(110) + I(200) + I(211) ) \leq 0.75$ is satisfied.

(3) The welded joint according to (1) or (2), wherein, in the first region, the depth with a C concentration of 0.02% or less is 15 $\mu$m or more.

(4) The welded joint according to any one of (1) to (3), wherein, in the first region, the surface roughness Ra is 3.5 $\mu$m or more.

(5) The welded joint according to any one of (1) to (4), wherein, in the second region, the thickness of a layer with an area ratio of ferrite of 90% or less is 20 $\mu$m or more.

(6) A joined structure of an automobile member comprised of a welded joint according to any one of (1) to (5) joining automobile members comprised of a plurality of steel sheets used as automobile members.

## [ADVANTAGEOUS EFFECT OF INVENTION]

According to the present invention, it is possible to obtain a welded joint inhibiting LME cracking at the time of production.

## BRIEF DESCRIPTION OF DRAWINGS

FIG. 1 is a view for explaining one example of a welded joint of the present invention.

FIG. 2 is a view showing one example of results of measurement of grazing incidence X-ray diffraction in the case where the ferrite phase is randomly oriented and the case where it is not.

FIG. 3 is one example of a structural photograph by an SEM near a surface layer at a distance of 0 to 100 $\mu$m from a weld shoulder part of the welded joint of the present invention.

FIG. 4 is a view explaining a position of cracking covered in evaluation of the LME resistance in an embodiment.

## EMBODIMENTS OF INVENTION

Below, the present invention will be explained. The present invention is not limited to the following aspects. First, details on improvement of the LME resistance in the present invention will be explained.

LME cracking, for example, is due to the microstructure of steel sheet being heated and transforming to austenite at the time of spot welding and penetration of molten zinc formed by the plating melting into the grain boundaries of the austenite at the surface layer part of the steel sheet. It is believed to arise due to the molten zinc which penetrated into the austenite grain boundaries causing the steel sheet to become brittle and further tensile stress being applied to the steel sheet at the time of welding. The inventors came up with the idea of utilizing the microstructure of the surface layer part of the steel sheet constituting welded joint as a method for improving the LME resistance. Specifically, by making the structure of the surface layer of the steel sheet a microstructure with a low C concentration and mainly comprised of the low LME sensitivity ferrite phase and, further, by making the ferrite phase randomly oriented, it is possible to suppress the occurrence of LME. Here, in the present invention, "LME resistance" means the property of LME cracking being suppressed in the steel sheet while "LME sensitivity" means the property of LME cracking easily occurring in the steel sheet.

The "ferrite phase being randomly oriented" means the features of the ferrite grains being leveled as a whole. In other words, it means the crystal orientations of the ferrite grains of the ferrite phase being randomized. By the crystal orientations of the ferrite grains being randomized, grain boundaries oriented in specific directions are kept from segregating and being continuously or intermittently connected. It is believed that LME cracking occurs due to Zn from the plating concentratedly penetrating the grain boundaries where grain boundary energies locally become lower. That is, if grain boundaries with grain boundary energies locally becoming lower are present in succession, it is believed the Zn from the plating will concentrate there and LME cracking will easily occur. By the features of the grain boundaries being leveled as a whole, it is believed grain boundaries with grain boundary energies becoming locally lower will no longer be connected in succession, Zn from the plating will be kept from locally concentrating, and as a result LME at the time of production of the welded joint can be suppressed.

In the present invention, the "ferrite phase being randomly oriented" is expressed by the following conditional expression. That is, steel sheet satisfying the following conditional expression means the ferrite phase being randomly oriented".

(Conditional Expression)

In grazing incidence X-ray diffraction with an incidence angle of 1° with respect to the steel sheet surface, when a diffraction intensity corresponding to the (110) plane is I(110), a diffraction intensity corresponding to the (200) plane is I(200), and a diffraction intensity corresponding to the (211) plane is I(211),

$$0.45 \leq \mathrm{I}(110) / ( \mathrm{I}(110) + \mathrm{I}(200) + \mathrm{I}(211) ) \leq 0.90$$

By configuring the steel sheet forming the welded joint in the above way, in the present invention, when producing steel sheet forming the welded joint, strain is imparted to the steel sheet after cold rolling, then the steel sheet is annealed at a high dew point. Due to this, decarburization is promoted and a ferrite phase becomes easier to form at the steel sheet surface. Furthermore, at this time, the present invention was completed based on the discovery that by controlling the temperature of start of humidification, it is possible to randomize the orientation of the ferrite phase.

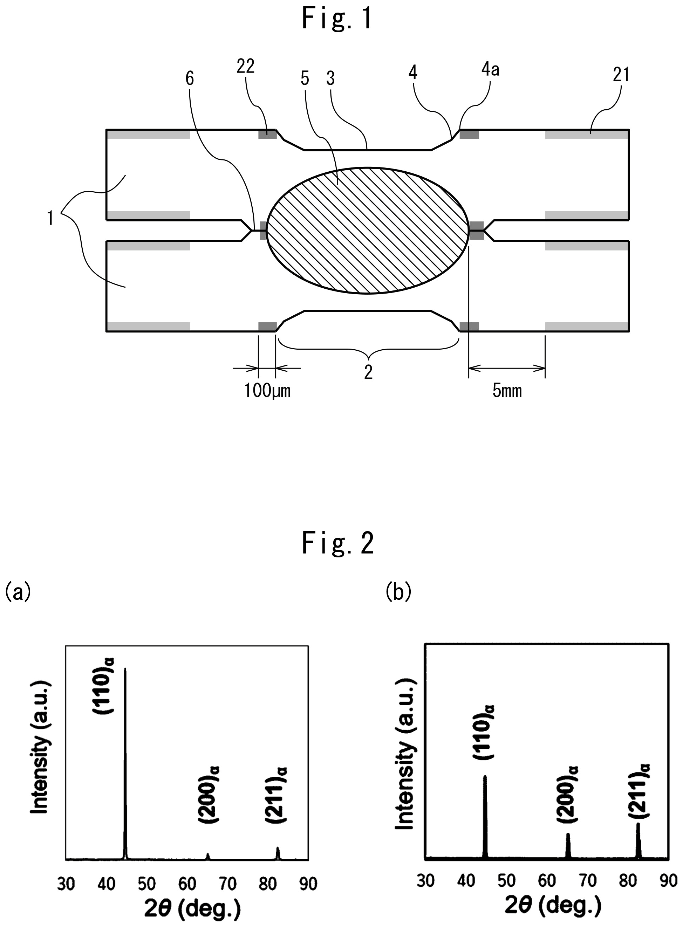

Below, the present invention will be explained in detail. First, referring to FIG. 1, a welded joint of the present invention will be explained. The welded joint of the present invention is provided with a plurality of steel sheets 1 overlaid and a spot welded part 2 joining the plurality of steel sheets. The spot welded part 2 has an indentation part 3 formed on the surface of the steel sheets 1 squeezed by the electrodes, a weld shoulder part 4, and a nugget 5. The "weld shoulder part 4" is a peripheral part of the indentation part 3 and is the slanted part from the deep part of the indentation part 3 to the outer end 4a of the weld shoulder part. Around the nugget 5, a pressure contact zone 6 formed by two steel sheets 1 pressure welded together is formed. The first region 21 is a surface layer region 5 mm or more away from the outer end of the nugget toward the outside of the nugget in the direction of spread of the surface of the steel sheet (nonheat affected zone). The second region 22 is a surface layer region 0 to 100 $\mu$m from the outer end of the weld shoulder part (heat affected zone). The plurality of steel sheets can include both plated steel sheets and not plated unplated steel sheets. Further, both high strength steel sheet and relatively low strength steel sheet may be included.

[Plated Steel Sheet]

At least one of the plurality of steel sheets is a plated steel sheet. The plated steel sheet is provided with a base material steel sheet and plating layer. The plating layer contains Zn and is formed on at least a surface corresponding to an overlaid surface of the plurality of steel sheets. The plating layer is not particularly limited so long as containing Zn. As one example, Zn-0.2%Al, Zn-0.5%Al, Zn-1.5%Al-1.5%Mg, Zn-20%Al-7%Mg, and Zn-30%Al-10%Mg may be mentioned. It may also be formed at other than a surface corresponding to an overlaid surface of the steel sheets.

The chemical composition of the plating layer can be determined by dissolving the plating layer in an acid solution to which an inhibitor suppressing corrosion of steel sheet has been added and measuring the obtained solution by ICP (high frequency inductively coupled plasma) spectrometry. As the acid solution to which an inhibitor has been added for dissolving the plating, for example, a 10 mass% hydrochloric acid solution to which 0.06 mass% inhibitor (ibit 710K made by Asahi Chemical Co., Ltd.) has been added may be used.

The thickness of the plating layer may for example be 3 to 50 $\mu$m. Further, the amount of deposition of the plating layer is not particularly limited, but for example may be 10 to 170 g/m$^2$ per surface. In the present invention, the amount of deposition of the plating layer is determined from the change in weight before and after removal of the plating layer. The plating layer is dissolved in an acid solution to which an inhibitor for suppressing corrosion of the base material steel sheet has been added and the amount is determined from the change in weight before and after the plating layer is pickled and peeled off. After removing the plating layer, the base material steel sheet is rinsed and dried.

[High Strength Steel Sheet]

At least one of the plurality of steel sheets is high strength steel sheet. Here, "high strength" means a hardness in a first region of 200 Hv or more. The hardness of the steel sheet is measured at a position of 1/2 depth at a position of a first region of the steel sheet forming the welded joint. The hardness is measured based on JIS Z 2244: 2009. The measurement load is made 200 gf. The hardness at the first region may be 240 Hv or more, 270 Hv or more, or 340 Hv or more.

Here, the above-mentioned at least one plated steel sheet and at least one high strength steel sheet may be separate steel sheets or may be the same single high strength galvanized steel sheet which is made high in strength and galvanized.

LME cracking occurs when there is molten zinc at the surface of high strength steel sheet at the time of welding. For example, if considering a welded joint comprised of two steel sheets, there is a possibility of LME cracking occurring if at least one of the two steel sheets is high strength and there is zinc plating present at the overlaid surfaces. In addition, even in a case for example where one is a relatively low strength galvanized steel sheet and the other is a high strength unplated steel sheet, at the time of welding, there is molten zinc plating present at the overlaid surfaces of the steel sheets and the molten zinc plating contacts the high strength unplated steel sheet as well, therefore there is a possibility of LME cracking occurring. The welded joint of the present invention suppresses LME cracking at the time of production even in such cases, therefore a welded joint comprised of one relatively low strength galvanized steel sheet and one high strength unplated steel sheet is also included. In addition a welded joint comprised of one relatively low strength unplated steel sheet and one high strength galvanized steel sheet, a welded joint comprised of one relatively low strength galvanized steel sheet and one high strength galvanized steel sheet, a welded joint comprised of both high strength galvanized steel sheets, etc. may also be included in the welded joints of the present invention.

The thickness of each steel sheet forming the welded joint of the present invention is not particularly limited. For example, it can also be made 0.1 to 3.2 mm. The sheet thickness may also be 0.2 mm or more, 0.4 mm or more, or 0.6 mm or more. The sheet thickness may also be 3.0 mm or less, 2.5 mm or less, 2.0 mm or less, or 1.8 mm or less.

[Chemical Composition]

Among the steel sheets forming the welded joint of the present invention, the above-mentioned high strength steel sheet has the chemical composition described below. Below, the "%" relating to the chemical composition shall mean "mass%". Further, in the numerical ranges in the chemical composition, numerical ranges expressed using "to" mean ranges including the numerical values described before and after the "to" as the lower limit value and upper limit value.

(C: 0.05 to 0.40%)

C (carbon) is an element securing the strength of steel. The content of C is 0.05% or more. To keep the C concentration of the surface layer explained later from becoming too high and, further, considering the weldability, the content of C is 0.40% or less. The content of C may also be 0.08% or more, 0.10% or more, or 0.15% or more. The content of C may also be 0.37% or less, 0.35% or less, or 0.30% or less.

(Si: 0.5 to 3.0%)

Si (silicon) is an element promoting ferrite stabilization and decarburization. By Si being included, decarburization proceeds at the surface layer part due to the later explained pretreatment and heat treatment and, further, the ferrite at the surface layer part becomes stabilized, whereby the LME resistance at the time of production of a welded joint is improved. To obtain this effect, the content of Si is 0.5% or more. If the content of Si is too great, even if performing high dew point annealing, external oxidation will progress and oxides (scale) will form at the surface layer of the steel sheet. Conversely, decarburization at the surfacemost part will be suppressed and the effect of improvement of the LME resistance t the time of production of a welded joint will become smaller. Considering this point, the content of Si is 3.0% or less. The content of Si may also be 0.6% or more, 0.7% or more, or 0.8% or more. The content of Si may also be 2.5% or less, 2.0% or less, or 1.5% or less.

(Mn: 0.1 to 5.0%)

Mn (manganese) is an element effective for obtaining a hard structure and thereby improving the strength of the steel. Considering the strength of steel, the content of Mn is 0.1% or more. Further, considering the drop in formability due to Mn segregation, the content of Mn is 5.0% or less. The content of Mn may also be 0.5% or more, 1.0% or more, or 1.5% or more. The content of Mn may also be 4.5% or less, 4.0% or less, or 3.5% or less.

(sol. Al: 0 to 3.0%)

Al (aluminum) is an element which dissolves in steel and, like Si, promotes ferrite stabilization and decarburization. "sol. Al" means acid soluble Al which does not form $Al_2O_3$ or other oxides and can dissolve in acid and is produced in the process of analysis of Al. It is found as the Al measured after deducting the insoluble residue on the filter paper. In the steel sheet forming the welded joint of the present invention, the role of the sol. Al can also be obtained by inclusion of Si, so sol. Al is not essential. The lower limit of the content of sol. Al is 0%. If the content of sol. Al is too great, even if performing high dew point annealing, external oxidation will progress and oxides (scale) will form at the surface layer of the steel sheet. Conversely, decarburization at the surfacemost part will be suppressed and the effect of improvement of the LME resistance t the time of production of a welded joint will become smaller. Considering this point, the content of sol. Al is 3.0% or less. The content of sol. Al may also be 0.1% or more, 0.3% or more, or 0.5% or more. The content of sol. Al may also be 2.0% or less, 1.5% or less, or 1.0% or less.

Si and sol. Al, as explained above, are also elements which cause the LME resistance to fall if excessively added, therefore the total value of the contents of Si and sol. Al is preferably 1.8% or less. The total of the contents of Si and sol. Al may also be 1.7% or less, 1.6% or less, or 1.5% or less.

(P: 0.0300% or Less)

P (phosphorus) is an impurity generally contained in steel. If the content of P is more than 0.0300%, the weldability is liable to fall. Therefore, the content of P is 0.0300% or less. The content of P may also be 0.0200% or less, 0.0100% or less, or 0.0050% or less. P is preferably not contained. The lower limit of the content of P is 0%. From the viewpoint of the dephosphorization costs, the content of P may be more than 0%, 0.0001% or more, or 0.0005% or more.

(S: 0.0300% or Less)

S (sulfur) is an impurity generally contained in steel. If the content of S is more than 0.0300%, the weldability falls and, further, the amount of precipitation of MnS increases whereby the bendability and other formability are liable to fall. Therefore, the content of S is 0.0300% or less. The content of S may also be 0.0100% or less, 0.0050% or less, or 0.0020% or less. S is preferably not contained. The lower limit of the content of S is 0%. From the viewpoint of the desulfurization costs, the content of S may be more than 0%, 0.0001% or more, or 0.0005% or more.

(N: 0.0100% or Less)

N (nitrogen) is an impurity generally contained in steel. If the content of N is more than 0.0100%, the weldability is liable to fall. Therefore, the content of N is 0.0100% or less. The content of N may also be 0.0080% or less, 0.0050% or less, or 0.0030% or less. N is preferably not contained. The lower limit of the content of N is 0%. From the viewpoint of the manufacturing costs, the content of N may be more than 0%, 0.0005% or more, or 0.0010% or more.

(O: 0.0030% or Less)

O (oxygen) is an element which forms oxides and causes the formability of the steel sheet to fall. If the content of O is too great, oxides are excessively formed etc. and the formability of the steel sheet easily falls. Therefore, the content of O is 0.0030% or less. The content of O may also be 0.0026% or less, 0.0024% or less, 0.0020% or less, or 0.0018% or less. O is preferably not contained, The lower limit of the content of O is 0%. From the viewpoint of the production costs, the content of O may also be more than 0%, 0.0005% or more, or 0.0010% or more.

(B: 0 to 0.0100%)

B (boron) is an element raising the hardenability and contributing to improvement of the strength and further segregating at the grain boundaries to strengthen the grain boundaries and improve the toughness, therefore may be contained in accordance with need. It is not an essential element, therefore the lower limit of the content of B is 0%. This effect is obtained even when contained in a trace amount, but if included, the content of B is preferably 0.0001% or more. Further, from the viewpoint of securing sufficient toughness, the content of B is 0.0100% or less. The content of B may also be 0.0002% or more, 0.0003% or more, or 0.0005% or more. The content of B may also be 0.0080% or less, 0.0060% or less, 0.0040% or less, or 0.0020% or less.

(Ti: 0 to 0.1500%)

Ti (titanium) is an element which precipitates as TiC during cooling of steel and contributes to improvement of strength, therefore may be contained in accordance with need. It is not an essential element, therefore the lower limit of the content of Ti is 0%. This effect is obtained even when contained in a trace amount, but if contained, the content of Ti is preferably 0.0001% or more. The content of Ti may also be 0.0003% or more or 0.0005% or more. On the other hand, if excessively contained, coarse TiN is produced and the toughness is liable to be harmed, therefore the content of Ti is 0.1500% or less. The content of Ti may also be 0.1000% or less, 0.0500% or less, 0.0050% or less, or 0.0020% or less.

(Nb: 0 to 0.1500%)

Nb (niobium) is an element contributing to improvement of strength through improvement of the hardenability, therefore may be contained in accordance with need. It is not an essential element, therefore the lower limit of the content of Nb is 0%. This effect is obtained even when contained in a trace amount, but if contained, the content of the Nb is preferably 0.0001% or more. The content of Nb may also be 0.0005% or more or 0.0010% or more. On the other hand, from the viewpoint of securing sufficient toughness, the content of Nb is 0.1500% or less. The content of Nb may also be 0.1000% or less, 0.0600% or less, or 0.0200% or less.

(V: 0 to 0.150%)

V (vanadium) is an element contributing to improvement of strength through improvement of the hardenability, therefore may be contained in accordance with need. It is not an essential element, therefore the lower limit of the content of V is 0%. This effect is obtained even when contained in a trace amount, but if contained, the content of the V is preferably 0.001% or more. The content of V may also be 0.003% or more, 0.005% or more, or 0.008% or more. On the other hand, from the viewpoint of securing sufficient toughness, the content of V is 0.150% or less. The content of V may also be 0.100% or less, 0.060% or less, or 0.020% or less.

(Cr: 0 to 2.00%)

Cr (chromium) is an element contributing to improvement of strength through improvement of the hardenability of steel, therefore may be contained in accordance with need. It is not an essential element, therefore the lower limit of the content of Cr is 0%. This effect is obtained even when contained in a trace amount, but if contained, the content of the Cr is preferably 0.001% or more. The content of Cr may also be 0.01% or more, 0.05% or more, or 0.10% or more. On the other hand, if excessively contained, Cr carbides are formed in large amounts and conversely the hardenability is liable to be impaired, therefore the content of Cr is 2.00% or less. The content of Cr may also be 1.80% or less, 1.50% or less, 0.50% or less, or 0.20% or less.

(Ni: 0 to 2.00%)

Ni (nickel) is effective for raising the hardenability of steel to raise the strength of the steel, therefore may be contained in accordance with need. It is not an essential element, therefore the lower limit of the content of Ni is 0%. This effect is obtained even when contained in a trace amount, but if contained, the content of the Ni is preferably 0.001% or more. The content of Ni may also be 0.01% or more, 0.02% or more, or 0.05% or more. On the other hand, excessive addition of Ni causes the cost to rise, therefore the content of Ni is 2.00% or less. The content of Ni may also be 1.80% or less, 1.50% or less, 0.50% or less, or 0.20% or less.

(Cu: 0 to 2.0000%)

Cu (copper) is effective for raising the hardenability of steel to raise the strength of the steel, therefore may be contained in accordance with need. It is not an essential element, therefore the lower limit of the content of Cu is 0%. This effect is obtained even when contained in a trace amount, but if contained, the content of the Cu is preferably 0.0001% or more. The content of Cu may also be 0.0002% or more or 0.0005% or more. On the other hand, from the viewpoint of suppressing a drop in toughness or cracking of the slab after casting, the content of Cu is 2.0000% or less. The content of Cu may also be 1.8000% or less, 1.5000% or less, 0.0050% or less, or 0.0020% or less.

(Mo: 0 to 1.00%)

Mo (molybdenum) is effective for raising the hardenability of steel to raise the strength of the steel, therefore may be contained in accordance with need. It is not an essential element, therefore the lower limit of the content of Mo is 0%. This effect is obtained even when contained in a trace amount, but if contained, the content of the Mo is preferably 0.001% or more. The content of Mo may also be 0.01% or more, 0.02% or more, or 0.03% or more. On the other hand, from the viewpoint of suppressing a drop in toughness, the content of Mo is 1.00% or less. The content of Mo may also be 0.80% or less, 0.60% or less, or 0.20% or less.

(W: 0 to 1.000%)

W (tungsten) is effective for raising the hardenability of steel to raise the strength of the steel, therefore may be contained in accordance with need. It is not an essential element, therefore the lower limit of the content of W is 0%. This effect is obtained even when contained in a trace amount, but if contained, the content of the W is preferably 0.001% or more. The content of W may also be 0.002% or more or 0.003% or more. On the other hand, from the viewpoint of suppressing a drop in toughness, the content of W is 1.000% or less. The content of W may also be 0.800% or less, 0.600% or less, 0.300% or less, 0.100% or less, or 0.020% or less.

(Ca: 0 to 0.1000%)

Ca (calcium) is an element contributing to control of inclusions, in particular to finely dispersing inclusions, and having the action of raising the toughness, therefore may be contained in accordance with need. It is not an essential element, therefore the lower limit of the content of Ca is 0%. This effect is obtained even when contained in a trace amount, but if contained, the content of the Ca is preferably 0.0001% or more. The content of Ca may also be 0.0002% or more or 0.0003% or more. On the other hand, excessive inclusion causes deterioration of the surface properties to surface in some cases, therefore the content of Ca is 0.1000% or less. The content of Ca may also be 0.0800% or less, 0.0500% or less, 0.0300% or less, 0.0100% or less, or 0.0010% or less.

(Mg: 0 to 0.100%)

Mg (magnesium) is an element contributing to control of inclusions, in particular to finely dispersing inclusions, and having the action of raising the toughness, therefore may be contained in accordance with need. It is not an essential element, therefore the lower limit of the content of Mg is 0%. This effect is obtained even when contained in a trace amount, but if contained, the content of the Mg is preferably 0.0001 % or more. The content of Mg may also be 0.0005% or more or 0.0008% or more. On the other hand, excessive inclusion causes deterioration of the surface properties to surface in some cases, therefore the content of Mg is 0.100% or less. The content of Mg may also be 0.090% or less, 0.080% or less, 0.030% or less, 0.010% or less, or 0.002% or less.

(Zr: 0 to 0.100%)

Zr (zirconium) is an element contributing to control of inclusions, in particular to finely dispersing inclusions, and having the action of raising the toughness, therefore may be contained in accordance with need. It is not an essential element, therefore the lower limit of the content of Zr is 0%. This effect is obtained even when contained in a trace amount, but if contained, the content of the Zr is preferably 0.001% or more. The content of Zr may also be 0.005% or more or 0.010% or more. On the other hand, excessive inclusion causes deterioration of the surface properties to surface in some cases, therefore the content of Zr is 0.100% or less. The content of Zr may also be 0.050% or less or 0.030% or less.

(Hf: 0 to 0.100%)

Hf (hafnium) is an element contributing to control of inclusions, in particular to finely dispersing inclusions, and having the action of raising the toughness, therefore may be contained in accordance with need. It is not an essential element, therefore the lower limit of the content of Hf is 0%. This effect is obtained even when contained in a trace amount, but if contained, the content of the Hf is preferably 0.0001 % or more. The content of Hf may also be 0.0003% or more or 0.0005% or more. On the other hand, excessive inclusion causes deterioration of the surface properties to surface in some cases, therefore the content of Hf is 0.100% or less. The content of Hf may also be 0.050% or less, 0.030% or less, 0.010% or less, 0.005% or less, or 0.002% or less.

(REM: 0 to 0.1000%)

A REM (rare earth element) is an element contributing to control of inclusions, in particular to finely dispersing inclusions, and having the action of raising the toughness, therefore may be contained in accordance with need. It is not an essential element, therefore the lower limit of the content of a REM is 0%. This effect is obtained even when contained in a trace amount, but if contained, the content of a REM is preferably 0.0001% or more. The content of a REM may also be 0.0003% or more or 0.0005% or more. On the other hand, excessive inclusion causes deterioration of the surface properties to surface in some cases, therefore the content of a REM is 0.1000% or less. The content of a REM may also be 0.0500% or less, 0.0300% or less, 0.0100% or less, 0.0050% or less, or 0.0020% or less. Note that "REM" is an abbreviation for a rare earth metal and means an element belonging to the lanthanoids. A REM is usually added as a misch metal.

In the high strength steel sheet forming the welded joint according to the present invention, the balance beside the above chemical composition comprises Fe and impurities. In the steel sheet according to the present invention, the balance may consist of Fe and impurities, that is, the balance may comprise only Fe and impurities. That is, the balance may also be comprised of just Fe and impurities. Here, "impurities" are constituents entering due to various factors in the production process such as the ore, scraps, and other such starting materials when industrially producing steel sheet and not having a detrimental effect on the LME cracking at the time of production of the welded joint according to the present invention.

The chemical composition of the steel sheet may be analyzed using an elemental analysis method known to persons skilled in the art. For example, it is analyzed by inductively coupled plasma - mass spectrometry (ICP-MS method). However, C and S may be measured using the combustion-infrared absorption method, while N can be measured using the inert gas melting-thermal conductivity method. For O, the inert gas melting-infrared absorption method is used. These analyses may be performed on a sample taken from the steel sheet by a method based on JIS G0417: 1999.

[Tensile Strength]

The high strength steel sheet forming the welded joint according to the present invention may have a tensile strength of 780 MPa or more. The present invention suppresses the LME occurring when welding high strength steel sheet, that is, steel sheet with a large tensile strength and hardness, to produce welded joint. The welded joint according to the present invention can suppress the LME even if using steel sheet with a tensile strength of 780 MPa or more. The upper limit of the tensile strength is not particularly prescribed, but from the viewpoint of securing toughness, may for example be 2000 MPa or less. The tensile strength may be measured by obtaining a JIS No. 5 tensile test piece having a direction perpendicular to the rolling direction and sheet thickness direction as a longitudinal direction and testing it based on JIS Z 2241: 2011. The tensile strength may be 980 MPa or more or 1180 MPa or more.

Next, the structure of the welded joint will be explained. Note that, here, the "surface layer part of the steel sheet" means the layer-shaped region having a depth from the surface of the steel sheet (sheet surface of steel sheet) down by a predetermined distance in the sheet thickness direction of the steel sheet. In the case of plated steel sheet, the surface of the steel sheet (sheet surface of steel sheet) means the surface of the steel sheet (sheet surface) excluding the plating. Note that the "predetermined distance in the sheet thickness direction" can be made the longer (deeper) length (depth) among the later explained "depth of surface layer with a C concentration of 0.02% or less" or "depth of layer with area ratio of ferrite phase of 90% or more".

<Properties of First Region]

[Surface Roughness Ra of Interface of Plating Layer and Base Material Steel Sheet and of Steel Sheet]

The high strength steel sheet forming the welded joint of the present invention has a first region in which the surface roughness Ra of the interface of the plating layer and base material steel sheet in the case where the high strength steel sheet is provided with a plating layer and of the high strength steel sheet in the case where the high strength steel sheet is not provided with a plating layer is more than 3.0 $\mu$m in terms of the arithmetic average height Ra defined by JIS B0601: 2013. The roughness may also be a Ra of 3.5 $\mu$m or more. The roughness of the interface in the case where the high strength steel sheet is provided with a plating layer is made the surface roughness Ra of the steel sheet measured after removing the plating. The plating layer is removed, in the same way as measurement of the amount of deposition explained above, by dissolving the plating layer in an acid solution to which an inhibitor suppressing corrosion of the base material steel sheet has been added.

In the present invention, when measuring the surface roughness Ra, based on JIS B 0601: 2013, 10 measurement locations are selected at the surface of the steel sheet at random so that the interval between measurement locations becomes 1 mm or more. At each of the measurement locations, the surface profile is measured by a laser microscope (for example,"VK-X3000" made by Keyence). Specifically, the laser microscope is used to take a photograph by a power of 20X. At the photographed image, using a standard length of 2000 $\mu$m, the arithmetic average roughness (Ra) at each measurement location is found. The arithmetic average value of the arithmetic average roughnesses (Ra) of the 10 points found at the respective measurement locations is made the "surface roughness Ra".

[Depth of Surface Layer With C Concentration of 0.02% or Less]

In the high strength steel sheet forming the welded joint of the present invention, the depth from the steel sheet surface in the sheet thickness direction with a C concentration measured by GDS (glow discharge spectrometry) of 0.02% or less is 3 μm or more. The starting point in the depth direction is the interface of the plating layer and base material steel sheet in the case where the high strength steel sheet is provided with a plating layer and is the surface of the high strength steel sheet in the case where the high strength steel sheet does not have a plating layer.

The LME sensitivity falls if the C concentration becomes lower, therefore by lowering the C concentration of the surface layer, the LME resistance is improved. Further, C is an austenite stabilizing element, therefore by this being less, the layer with a low LME sensitivity is stabilized

Such a surface layer structure (microstructure at surface layer part of steel sheet) can be obtained as a decarburized layer formed by making the chemical composition of the steel sheet the one explained above and performing the pretreatment and annealing explained later.

If the depth with a C concentration of 0.02% or less is 8 μm or more, this contributes to improvement of the LME resistance, so the upper limit of the depth with a C concentration of 0.02% or less is not particularly prescribed. The depth with a C concentration of 0.02% or less may, for example, also be 50 μm or less, 40 μm or less, or 30 μm or less. The depth with a C concentration of 0.02% or less is preferably 10 μm or more, more preferably 12 μm or more, still more preferably 15 μm or more or 20 μm or more.

The GDS measurement is performed at five measurement points in the sheet thickness direction. At each of the measurement points, the arithmetic average value of depth of the region with a C concentration of 0.02% or less is made the depth of the surface layer with a C concentration of 0.02% or less. The five measurement points are randomly determined so that the measurement points of the steel sheet surface are separated by 5 mm or more intervals. The measurement conditions are as follows. Only naturally, measurement results can be obtained even without, for example, using the measurement apparatus or other conditions explained above, but if differences arise in the measurement results, the steel sheet according to the present invention is identified by measurement results obtained by the following conditions.

Apparatus: high frequency glow discharge optical emission spectrometry apparatus (made by LECO Japan Corporation, Model Name "GDS850A"
Ar gas pressure: 0.3 MPa
Anode diameter: 4 mmφ
RF output: 30W
Measurement time: 200 to 1500 seconds

[Diffraction Intensity Ratio of Ferrite Phase by Grazing Incidence X-ray Diffraction (XRD)]

In the high strength steel sheet forming the welded joint of the present invention, in grazing incidence X-ray diffraction with an incidence angle of 1° with respect to the surface of the steel sheet, when a diffraction intensity corresponding to the (110) plane is I(110), a diffraction intensity corresponding to the (200) plane is I(200), and a diffraction intensity corresponding to the (211) plane is I(211), the conditional expression of $0.45 \leq I(110) / ( I(110) + I(200) + I(211) ) \leq 0.90$ is satisfied.

The value of the middle term "$I(110) / ( I(110) + I(200) + I(211) )$" in the conditional expression is preferably 0.85 or less, more preferably 0.80 or less, still more preferably 0.75 or less. Further, $I(110) / ( I(200) + I(211) )$ is preferably 0.50 or more. The conditional expression means that the ferrite phase is randomly organized. If the ferrite phase is completely randomly oriented, the value of the middle term is 0.67.

Here, the grazing incidence X-ray diffraction (also referred to as grazing incidence XRD, low angle incidence XRD, or slant XRD) is a measurement technique setting the incidence angle of the incident X-rays small, maintaining that incidence angle, and scanning only the detector (changing the detection angle). Due to this, it is possible to efficiently detect information of the orientation ability of crystal grains down to a depth of several μm or so of the surface layer part of the sample. In the present invention, the incidence angle of the X-ray is fixed at 1° to detect the orientation ability of ferrite at the surface layer part of the steel sheet. Note that, the incidence angle is the angle formed by the surface of the sample (steel sheet) and incidence direction of the incident X-rays. Note that, if the high strength steel sheet is provided with a plating layer, this is measured after removal of the plating layer. The plating layer is removed, in the same way as measurement of the amount of deposition explained above, by dissolving the plating layer in an acid solution to which an inhibitor suppressing corrosion of the base material steel sheet has been added.

FIG. 2 shows an example of the results of grazing incidence XRD analysis in the case (b) where the ferrite phase is randomized and the case (a) where it is not. (a) is the result of grazing incidence XRD analysis in ordinary (conventional) steel sheet. It will be understood that the phase is in the state oriented to the (110) direction. For this reason, the value of the middle term "I(110) / ( I(110) + 1(200) + I(211) )" of the conditional expression becomes a relatively large 0.91. (b) is the result of grazing incidence XRD analysis in steel sheet forming the welded joint of the present invention. Compared with (a), there is less orientation in the (110) direction. Therefore, the value of the middle term "I(110) / ( I(110) + I(200) + I(211) )" of the conditional expression becomes a relatively smaller 0.58.

<Properties of Second Region>

[Thickness of High Ferrite Layer (Layer With Area Ratio of Ferrite of 90% or More)]

In the high strength steel sheet forming the welded joint of the present invention, at the second region, the thickness of the layer with an area ratio of ferrite of 90% or more (below, referred to as the "high ferrite layer") in the thickness direction of the base material steel sheet starting from the interface of the plating layer and base material steel sheet is 15 $\mu$m or more.

If the thickness of the high ferrite layer is 15 $\mu$m or more, this contributes to suppression of LME at the time of production of the welded joint, therefore the upper limit of the thickness is not particularly prescribed. The thickness of the high ferrite layer may, for example, be 100 $\mu$m or less, 80 $\mu$m or less, 60 $\mu$m or less, or 40 $\mu$m or less. The thickness of the high ferrite layer is preferably 20 $\mu$m or more.

The structure besides the ferrite in the high ferrite layer is not limited. For example, it may be made one or more of martensite, bainite, and cementite.

The thickness of the high ferrite layer is measured by finishing a thickness cross-section of the steel sheet by mechanical polishing to a mirror surface, then etching the observed cross-section by a Nital reagent and analyzing the secondary electron image by observation by an SEM. For the observation by an SEM, a field emission scanning electron microscope (for example, "JSM 7000F" made by JEOL, acceleration voltage: 15 kV) is used. In the observed cross-section, the range of depth from the surface of the steel sheet (sheet surface) down to a depth of 500 $\mu$m in the sheet thickness direction (vertical direction of observed cross-section) and range of width of 600 $\mu$m in the direction perpendicular to the sheet thickness direction (horizontal direction of observed cross-section) is made the observed field. In that observed cross-section, five observed fields in the direction perpendicular to the sheet thickness direction (horizontal direction of observed cross-section) are observed by an SEM so as to have observed fields having 1000 $\mu$m or more intervals between them to obtain secondary electron images. The observed resolution is made 1280×960 pixels. Note that, in the case of plated steel sheet, the "surface" of the steel sheet (sheet surface) is the surface of the steel sheet from which the plating has been removed.

The obtained five secondary electron images are calculated for ratios of ferrite by the point counting method. More specifically, first, equal interval lattices are drawn on the secondary images. Next, by finding the number of lattice points of each lattice with structures at the lattice points comprised of ferrite and dividing this by the total number of lattice points, the fraction of ferrite is measured. The greater the total number of lattice points, the more accurately the area ratio can be found. In the present invention, the lattice intervals are made 2 $\mu$m×2 $\mu$m and the total number of lattice points is made 1500 points.

In a secondary electron image, regions relatively small in brightness and not having substructures observable can be judged as ferrite. Here, "substructures" mean laths, blocks, or other transformed structures formed inside the prior austenite phase. In a secondary electron image, ferrite is observed as a region relatively low in brightness and having a spread of relatively monotonous brightness or hue. In the present invention, the microstructure other than ferrite does not have to be specially judged, but the judgment criteria for tempered martensite, pearlite, ferrite, fresh martensite, or retained austenite or bainite at the secondary electron image are shown below. A region having substructures (lath boundaries and block boundaries) in the grains and having carbides precipitated with several variants is judged as tempered martensite. Further, a region having cementite precipitated in a lamellar form is judged as pearlite. A region having a large brightness and not having substructures appearing by etching is judged as fresh martensite or retained austenite. A region not corresponding to any of the above is judged as bainite. For simplicity, the area ratio of the ferrite phase can be found if differentiating the ferrite from other structures.

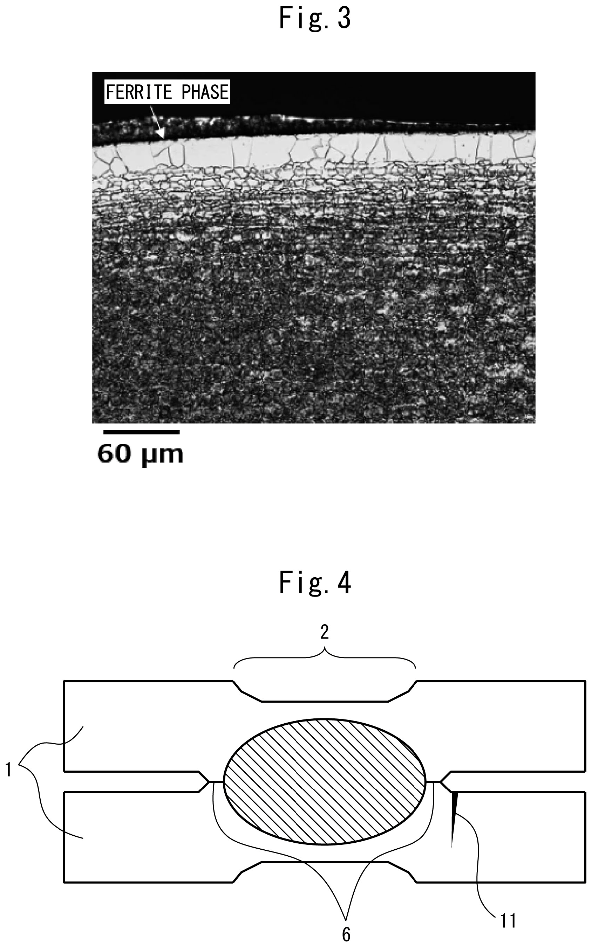

FIG. 3 shows one example of a structural photograph by an SEM of the vicinity of the surface layer of a steel sheet forming the welded joint of the present invention at a distance of 0 to 100 $\mu$m from the weld shoulder part. In the structural photograph of FIG. 3, the white parts are ferrite. It was confirmed that the vicinity of the surface layer formed a structure mainly comprised of ferrite.

Ferrite is low in LME sensitivity. The surface layer structure of the steel sheet being a structure mainly comprised of ferrite is preferable from the viewpoint of suppression of LME at the time of production of the welded joint. Such a surface layer structure can be obtained by making the chemical composition of the steel sheet the one explained above and performing the pretreatment step and annealing step explained later.

If the steel sheet has a plating layer, the starting point of the depth with a C concentration of 0.02% or less and the thickness of the layer with an area ratio of the ferrite of 90% or more by GDS measurement is the interface of the base material steel sheet and the plating layer.

<<Method of Production>>

Next, the method of production of a welded joint according to the present invention will be explained. First, a method of production of the high strength steel sheet forming a welded joint will be explained.

The high strength steel sheet forming the welded joint according to the present invention can be obtained by, for example, a method of production comprising a casting step of casting molten steel adjusted in chemical composition to form a steel slab, a hot rolling step of hot rolling the steel slab to obtain hot rolled steel sheet, a coiling step of coiling up the hot rolled steel sheet, a cold rolling step of cold rolling the coiled up hot rolled steel sheet to obtain cold rolled steel sheet, a pretreatment step of pretreating (grit blasting) the cold rolled steel sheet, and an annealing step of annealing the pretreated cold rolled steel sheet. Alternatively, after the hot rolling step, the hot rolled steel sheet need not be coiled, but may be pickled then cold rolled as it is.

<Casting Step>

The conditions of the casting step are not particularly limited. For example, after smelting by a blast furnace, electric furnace, etc., various types of secondary refining may be performed, then the usual continuous casting, casting by ingot method, or other method may be used for casting.

<Hot Rolling Step>

The steel slab obtained by casting can be hot rolled to obtain hot rolled steel sheet. The hot rolling step is performed by hot rolling the cast steel slab directly or after cooling once, then reheating it. If reheating, the heating temperature of the steel slab may, for example, be 1100 to 1250°C. In the hot rolling step, usually rough rolling and finish rolling are performed. The temperature and reduction rate of each rolling may be suitably changed in accordance with the desired microstructure or sheet thickness. For example, the end temperature of the finish rolling may be 900 to 1050°C and the reduction rate of the finish rolling may be 10 to 50%.

<Coiling Step>

The hot rolled steel sheet can be coiled at a predetermined temperature. The coiling temperature may be suitably changed in accordance with the desired microstructure etc. For example, it may be 500 to 800°C. Before coiling or after coiling, then uncoiling, the hot rolled steel sheet may be subjected to predetermined heat treatment. Alternatively, the coiling step need not be performed and the hot rolled steel sheet can be pickled after the hot rolling step and the later explained cold rolling performed.

<Cold Rolling Step>

After pickling the hot rolled steel sheet, the hot rolled steel sheet can be cold rolled to obtain cold rolled steel sheet. The reduction rate of the cold rolling may be suitably changed in accordance with the desired microstructure or sheet thickness. For example, it may be 20 to 80%. After the cold rolling step, for example, the steel sheet may be air cooled down to room temperature for cooling.

<Pretreatment Step>

To obtain a surface layer structure of steel sheet such as explained above, the predetermined pretreatment must be performed followed by annealing.

"Pretreatment" includes grit blasting for blasting the surface of the cold rolled steel sheet using an angular blasting material. The blasting material able to be used is not particularly limited, but, for example, polygonal shaped steel grit having a mean grain size of 100 to 500 $\mu$m can be used. As such grit, for example, TDG-30 made by WINOA IKK JAPAN may be mentioned. The amount of blasting of grit may be 5 to 400 kg/m$^2$. Due to this, it is possible to increase the surface roughness Ra while introducing strain in the surface layer part of the steel sheet. By performing such grit blasting, in the later explained annealing step, decarburization is promoted and a structure with stable ferrite can be efficiently formed at the surface layer of the steel sheet. The greater the amount of blasting, the greater the effect of improvement of the LME resistance, but if more than a certain amount of blasting, for example, 400 kg/m$^2$, the effect becomes saturated. Note that per unit time and unit area of the level of blasting of 400 kg/m$^2$ is $4.0 \times 10^{-4}$ kg/(mm$^2$ ·min).

<Annealing Step>

After the pretreatment step, the cold rolled steel sheet is annealed.

In the present invention, an annealing step is performed of holding the steel sheet given strain by the grit blasting at a predetermined holding temperature and a high dew point. The speed of temperature rise up to the predetermined holding temperature is not particularly limited and may be 1 to 10°C/s. The dew point is controlled by humidification control from 300°C or more and less than 600°C, preferably humidification control from 450 to 550°C. That is, the dew point (humidification) control start temperature is 300°C or more and less than 600°C, preferably 450 to 550°C. The dew point in the case of no dew point (humidification) control is usually less than -30°C. The dew point at the time of annealing (high dew point) is -30 to 20°C to promote decarburization. The dew point at the time of annealing (high dew point) is preferably -10°C or more. Further, the dew point at the time of annealing is preferably 5°C or less. The predetermined holding temperature at the annealing step (highest heating temperature) is 750 to 900°C, preferably 770 to 870°C, to promote decarburization. The holding time at the holding temperature (highest heating temperature) of the annealing step is 20 to 300 seconds, preferably 50 to 200 seconds. Further, the atmosphere is preferably a nonoxidizing atmosphere, for example, can be N$_2$-1 to 10 vol%H$_2$, N$_2$-2 to 4 vol%H$_2$.

By making the dew point, holding temperature, and holding time the above such ranges, it is possible to promote decarburization, lower the C concentration of the surface layer, and suitably control the ferrite phase fraction. Furthermore, by making the dew point (humidification) control start temperature the above such range, decarburization of the surface layer part of the steel sheet is promoted. Together with this, internal oxidation of Si or Mn is promoted, internal oxides are rapidly formed, and the formed internal oxides function as nucleation sites. As a result, the orientation of the ferrite phase is randomized. If the dew point (humidification) control start temperature is too low, external oxidation proceeds and internal oxidation of Si or Mn does not proceed, therefore the orientation of the ferrite phase becomes hard to randomize.

The annealing is for example performed in a state applying 1 to 20 MPa of tension. If tension is applied at the time of annealing, it becomes possible to more effectively introduce strain into the steel sheet and decarburization of the surface layer is promoted.

By performing the above-mentioned steps, decarburization is promoted at the surface layer part of the steel sheet and steel sheet with a surface layer part of the steel sheet made a structure mainly comprised of a randomly oriented ferrite phase can be obtained.

<<Method of Production of Plated Steel Sheet>>

The plated steel sheet forming the welded joint according to the present invention can be obtained by a plating step of forming a plating layer including Zn on the surface of the steel sheet. The high strength steel sheet produced as explained above may also be formed with a plating layer.

<Plating Step>

The plating may be performed in accordance with a method known to persons skilled in the art. The plating, for example, may be performed by hot dip coating or may be performed by electroplating. Preferably the plating is performed by hot dip coating. The conditions of the plating may be suitably set considering the chemical composition, thickness, amount of deposition, etc. of the desired plating layer. After the plating step, a known alloying step may be performed to obtain an alloyed plating.

<Spot Welding Step>

A plurality of the above-mentioned steel sheets are overlaid and spot welded to obtain a welded joint. The conditions of the spot welding are not particularly limited. For example, it is possible to perform spot welding using a dome radius type tip diameter 5 to 10 mm weld electrodes by a squeezing force of 1.0 to 5.0 kN, a weld time of 0.2 to 1.2 seconds, and a weld current of 6 to 14 kA.

The welded joint according to the present invention is suppressed in LME cracking at the time of production, so can be suitably used in automobiles, home electric appliance products, building materials, and other wide fields. In particular, in the automobile field, it is possible to suitably use this as a joined structure for joining automobile members.

EXAMPLES

Below, examples will be used to explain the present invention in more detail. The present invention is not limited to these examples.

<Test No. 1>

Molten steel adjusted to the chemical composition described in Test No. 1 of Table 1 was smelted in a blast furnace and cast by continuous casting to obtain a steel slab. The obtained steel slab was heated to 1200°C and hot rolled by an end temperature of finish rolling of 950°C and a reduction rate of finish rolling of 30% to obtain hot rolled steel sheet. The obtained hot rolled steel sheet was coiled at the coiling temperature 650°C, pickled, then cold rolled by a reduction rate of 50% to obtain cold rolled steel sheet. The thickness of the cold rolled steel sheet was 1.6 mm.

Next, the surface of the obtained cold rolled steel sheet was grit blasted using as the blasting material TGD-30 made by WINOA IKK JAPAN by a blasting rate of 5 kg/m² as shot blasting. The surface roughness Ra of the cold rolled steel sheet after the grit blasting was 3.3 μm.

Next, the grit blasted cold rolled steel sheet was annealed by raising it in temperature in a furnace with an oxygen concentration of 20 ppm or less and $N_2$ -4%$H_2$ gas atmosphere by a rate of temperature rise up to 500°C of 6.0°C/s and further raising it in temperature up to 800°C by a rate of temperature rise of 2.0°C/s and held there for 40 seconds. At this time, the dew point started to be controlled from 300°C to give a dew point of 0°C. The annealing was performed in a state applying 5.0 MPa tension to the steel sheet.

Furthermore, the annealed steel sheet was dipped in a 450°C hot dip galvanization bath (Zn-0.14%Al) for 3 seconds, then was pulled out at 100 mm/s and controlled to an amount of plating deposition of 50 g/m² by an $N_2$ wiping gas. After that, it was alloyed at 520°C for 30 seconds to obtain galvannealed steel sheet.

One each of the obtained hot dip galvannealed steel sheet and a counterpart material of the same type of steel sheet were overlaid and spot welded using dome radius type tip diameter 8 mm weld electrodes by a weld angle of 2°, a squeezing force of 4.0 kN, a weld time of 0.8 second, and a weld current of 12 kA to produce a welded joint. This was evaluated for LME resistance at the time of production. Note that below the steel sheets prepared in the Examples will be referred to as the "example steel sheets" and the steel sheets combined with when producing the welded joint will be referred to as the "counterpart steel sheets".

<Test Nos. 2 to 55>

Except for making the chemical compositions of the steel sheets the ones described in Table 1 or Table 2, making the conditions of the pretreatment steps and conditions of the annealing steps the ones described in Table 3, and the plating conditions the ones described in Table 4, the same procedure was performed under the same conditions of Example 1 to prepare steel sheets or plated steel sheets. Note that, in Test No. 32, the grit blasting was omitted. In Test No. 35, instead of the grit blasting, the surface was treated by grinding using brush rolls. In the types of plating in Table 4, "a" means hot dip galvannealing, "b" means hot dip galvanization with the alloying treatment in Example 1 omitted, "c" means making the plating bath Zn-1.5%Al-1.5%Mg and omitting the alloying treatment, and "unplated" means cold rolled steel sheet not plated. The welded joint was produced under the same welding conditions as Test No. 1 by combination with the steel sheet described in the counterpart materials of Table 4. "Same type" of the counterpart material indicates use of the same type of steel sheet as the steel sheet of the examples as the counterpart material steel sheet. Further, "unplated, same type" indicates use of the same type of steel sheet as the steel sheet of the example as the counterpart material steel sheet, but not plated, while "GA, same type" indicates use of the same type of steel sheet as the steel sheet of that test number (test no.) as the counterpart material steel sheet which has been galvannealed. Further, "GI270IF" indicates use of commercially available hot dip galvanized steel sheet with a tensile strength of 270 MPa as the counterpart material steel sheet, while "GA590" indicates use of commercially available galvannealed steel sheet with a tensile strength of 590 MPa as the counterpart material steel sheet.

[Table 1]

Table 1

| Test no. | Class | Chemical composition (mass%), balance: Fe and impurities | | | | | | | | | | | |
|---|---|---|---|---|---|---|---|---|---|---|---|---|---|
| | | C | Si | Mn | sol.Al | P | S | N | O | B | Ti | Nb | Other |
| 1 | Inv. ex. | 0.05 | 1.5 | 2.4 | 0.0 | 0.0001 | 0.0010 | 0.0005 | 0.0013 | - | - | - | |

(continued)

| Test no. | Class | Chemical composition (mass%), balance: Fe and impurities | | | | | | | | | | | |
|---|---|---|---|---|---|---|---|---|---|---|---|---|---|
| | | C | Si | Mn | sol.Al | P | S | N | O | B | Ti | Nb | Other |
| 2 | Inv. ex. | 0.05 | 1.5 | 2.5 | 0.0 | 0.0001 | 0.0003 | 0.0007 | 0.0008 | 0.0002 | 0.0008 | 0.0001 | |
| 3 | Inv. ex. | 0.10 | 3.0 | 3.0 | 0.2 | 0.0080 | 0.0003 | 0.0002 | 0.0011 | 0.0002 | 0.0001 | 0.0001 | |
| 4 | Inv. ex. | 0.10 | 1.5 | 2.0 | 0.2 | 0.0080 | 0.0003 | 0.0002 | 0.0016 | 0.0002 | 0.0001 | 0.0009 | |
| 5 | Inv. ex. | 0.10 | 1.0 | 2.5 | 0.5 | 0.0080 | 0.0005 | 0.0001 | 0.0012 | 0.0010 | 0.0006 | 0.0009 | Hf: 0.001 |
| 6 | Inv. ex. | 0.10 | 1.0 | 2.0 | 0.5 | 0.0080 | 0.0005 | 0.0007 | 0.0011 | 0.0001 | 0.0006 | 0.0001 | |
| 7 | Inv. ex. | 0.10 | 1.0 | 2.0 | 0.5 | 0.0070 | 0.0003 | 0.0001 | 0.0014 | 0.0001 | 0.0001 | 0.0001 | |
| 8 | Inv. ex. | 0.10 | 0.9 | 2.2 | 0.5 | 0.0020 | 0.0004 | 0.0006 | 0.0014 | 0.0006 | 0.0009 | 0.0001 | |
| 9 | Inv. ex. | 0.20 | 1.0 | 2.0 | 0.5 | 0.0100 | 0.0002 | 0.0001 | 0.0011 | 0.0004 | 0.0001 | 0.0004 | Mg: 0.001 |
| 10 | Inv. ex. | 0.20 | 1.0 | 2.0 | 0.4 | 0.0020 | 0.0009 | 0.0002 | 0.0011 | 0.0002 | 0.0006 | 0.0008 | Zr: 0.015 |
| 11 | Inv. ex. | 0.20 | 0.8 | 2.2 | 0.7 | 0.0008 | 0.0008 | 0.0007 | 0.0008 | 0.0008 | 0.0009 | 0.0001 | |
| 12 | Inv. ex. | 0.20 | 0.9 | 2.5 | 0.6 | 0.0017 | 0.0004 | 0.0009 | 0.0014 | 0.0004 | 0.0007 | 0.0009 | Cr: 0.10 |
| 13 | Inv. ex. | 0.20 | 0.9 | 2.3 | 0.4 | 0.0011 | 0.0002 | 0.0008 | 0.0010 | 0.0005 | 0.0003 | 0.0017 | Cu: 0.0007 |
| 14 | Inv. ex. | 0.20 | 1.0 | 2.3 | 0.5 | 0.0031 | 0.0002 | 0.0007 | 0.0011 | 0.0001 | 0.0003 | 0.0031 | |
| 15 | Inv. ex. | 0.20 | 1.0 | 2.2 | 0.0 | 0.0065 | 0.0004 | 0.0006 | 0.0016 | 0.0006 | 0.0005 | 0.0017 | Ni: 0.08 |
| 16 | Inv. ex. | 0.25 | 1.0 | 2.2 | 0.5 | 0.0012 | 0.0008 | 0.0009 | 0.0012 | 0.0009 | 0.0006 | 0.0012 | |
| 17 | Inv. ex. | 0.25 | 1.6 | 2.2 | 0.5 | 0.0040 | 0.0001 | 0.0005 | 0.0018 | 0.0007 | 0.0003 | 0.0099 | V: 0.009 |
| 18 | Inv. ex. | 0.30 | 0.8 | 5.0 | 0.7 | 0.0099 | 0.0006 | 0.0008 | 0.0011 | 0.0005 | 0.0004 | 0.0091 | |
| 19 | Inv. ex. | 0.30 | 0.8 | 0.3 | 0.7 | 0.0110 | 0.0005 | 0.0001 | 0.0011 | 0.0005 | 0.0007 | 0.0020 | |
| 20 | Inv. ex. | 0.35 | 1.0 | 3.0 | 0.7 | 0.0092 | 0.0004 | 0.0006 | 0.0030 | 0.0008 | 0.0005 | 0.0080 | Mo: 0.09 |
| 21 | Inv. ex. | 0.35 | 0.8 | 2.2 | 0.7 | 0.0091 | 0.0010 | 0.0004 | 0.0011 | 0.0004 | 0.0005 | 0.0003 | REM: 0.0008 |
| 22 | Inv. ex. | 0.40 | 1.0 | 2.2 | 0.5 | 0.0045 | 0.0003 | 0.0005 | 0.0014 | 0.0004 | 0.0005 | 0.0020 | |
| 23 | Inv. ex. | 0.40 | 0.8 | 2.2 | 0.7 | 0.0035 | 0.0008 | 0.0001 | 0.0021 | 0.0002 | 0.0002 | 0.0700 | W: 0.005 |
| 24 | Inv. ex. | 0.40 | 0.8 | 2.2 | 0.7 | 0.0082 | 0.0009 | 0.0004 | 0.0011 | 0.0004 | 0.0010 | 0.0082 | |
| 25 | Inv. ex. | 0.40 | 0.8 | 2.2 | 0.7 | 0.0080 | 0.0008 | 0.0003 | 0.0022 | 0.0007 | 0.0004 | 0.0091 | Ca: 0.0005 |
| 26 | Comp. ex. | <u>0.41</u> | 1.0 | 2.3 | 0.3 | 0.0100 | 0.0003 | 0.0003 | 0.0012 | 0.0001 | 0.0001 | - | |
| 27 | Comp. ex. | 0.20 | <u>0.4</u> | 2.3 | 0.3 | 0.0100 | 0.0010 | 0.0002 | 0.0019 | 0.0001 | 0.0001 | - | |
| 28 | Comp. ex. | 0.20 | <u>3.1</u> | 2.3 | 0.4 | 0.0100 | 0.0008 | 0.0006 | 0.0011 | 0.0005 | 0.0008 | - | |
| * Underlines indicate outside scope of present invention. | | | | | | | | | | | | | |

[Table 2]

| Table 2 (continuation of Table 1) | | | | | | | | | | | | | |
|---|---|---|---|---|---|---|---|---|---|---|---|---|---|
| Test no. | Class | Chemical composition (mass%), balance: Fe and impurities | | | | | | | | | | | |
| | | C | Si | Mn | sol.Al | P | S | N | O | B | Ti | Nb | Other |
| 29 | Comp. ex. | 0.20 | 1.0 | 2.3 | <u>3.2</u> | 0.0100 | 0.0003 | 0.0003 | 0.0012 | 0.0001 | 0.0007 | - | |
| 30 | Comp. ex. | 0.20 | 1.0 | 2.3 | 0.3 | 0.0100 | 0.0009 | 0.0006 | 0.0017 | 0.0007 | 0.0002 | - | |
| 31 | Comp. ex. | 0.20 | 1.0 | 2.3 | 0.3 | 0.0100 | 0.0005 | 0.0003 | 0.0017 | 0.0009 | 0.0009 | - | |
| 32 | Comp. ex. | 0.20 | 1.0 | 2.5 | 0.3 | 0.0100 | 0.0004 | 0.0006 | 0.0016 | 0.0003 | 0.0001 | - | |
| 33 | Comp. ex. | 0.20 | 1.0 | 2.5 | 0.3 | 0.0100 | 0.0005 | 0.0005 | 0.0011 | 0.0004 | 0.0002 | - | |
| 34 | Comp. ex. | 0.20 | 1.0 | 2.5 | 0.3 | 0.0100 | 0.0005 | 0.0005 | 0.0012 | 0.0004 | 0.0002 | - | |
| 35 | Comp. ex. | 0.20 | 1.0 | 2.5 | 0.3 | 0.0100 | 0.0005 | 0.0005 | 0.0011 | 0.0004 | 0.0002 | - | |
| 36 | Comp. ex. | 0.20 | 1.0 | 2.5 | 0.3 | 0.0100 | 0.0005 | 0.0005 | 0.0013 | 0.0004 | 0.0002 | - | |
| 37 | Inv. ex. | 0.20 | 0.8 | 2.5 | 0.6 | 0.0018 | 0.0006 | 0.0010 | 0.0018 | 0.0005 | 0.0007 | 0.0008 | Cr: 1.80 |
| 38 | Inv. ex. | 0.20 | 0.9 | 2.2 | 0.7 | 0.0017 | 0.0004 | 0.0009 | 0.0017 | 0.0004 | 0.0008 | 0.0007 | V: 0.15 |
| 39 | Inv. ex. | 0.25 | 0.8 | 2.5 | 0.6 | 0.0019 | 0.0005 | 0.0009 | 0.0014 | 0.0004 | 0.0009 | 0.0010 | Ni: 1.90 |
| 40 | Inv. ex. | 0.20 | 0.9 | 2.2 | 0.6 | 0.0015 | 0.0005 | 0.0009 | 0.0016 | 0.0005 | 0.0010 | 0.0010 | Cu: 1.9000 |
| 41 | Inv. ex. | 0.25 | 0.9 | 2.5 | 0.7 | 0.0017 | 0.0004 | 0.0009 | 0.0014 | 0.0004 | 0.0008 | 0.0009 | Mo: 1.00 |
| 42 | Inv. ex. | 0.20 | 0.8 | 2.5 | 0.6 | 0.0016 | 0.0005 | 0.0009 | 0.0012 | 0.0004 | 0.0007 | 0.0009 | W: 1.000 |
| 43 | Inv. ex. | 0.20 | 0.9 | 2.2 | 0.7 | 0.0017 | 0.0004 | 0.0009 | 0.0014 | 0.0004 | 0.0007 | 0.0008 | Ca: 0.1000 |
| 44 | Inv. ex. | 0.25 | 0.9 | 2.5 | 0.6 | 0.0018 | 0.0005 | 0.0010 | 0.0017 | 0.0005 | 0.0008 | 0.0009 | Mg: 0.100 |
| 45 | Inv. ex. | 0.20 | 1.0 | 2.2 | 0.6 | 0.0017 | 0.0005 | 0.0009 | 0.0014 | 0.0004 | 0.0011 | 0.0010 | Zr: 0.100 |
| 46 | Inv. ex. | 0.20 | 0.9 | 2.5 | 0.6 | 0.0017 | 0.0004 | 0.0009 | 0.0017 | 0.0004 | 0.0008 | 0.0009 | Hf: 0.100 |
| 47 | Inv. ex. | 0.25 | 0.8 | 2.4 | 0.6 | 0.0018 | 0.0008 | 0.0011 | 0.0016 | 0.0006 | 0.0007 | 0.0008 | REM: 0.1000 |
| 48 | Inv. ex. | 0.20 | 0.9 | 2.5 | 2.2 | 0.0019 | 0.0004 | 0.0009 | 0.0015 | 0.0004 | 0.0009 | 0.0009 | |
| 49 | Inv. ex. | 0.20 | 0.9 | 2.5 | 0.6 | 0.0289 | 0.0008 | 0.0008 | 0.0013 | 0.0004 | 0.0008 | 0.0010 | |
| 50 | Inv. ex. | 0.20 | 0.8 | 2.5 | 0.6 | 0.0017 | 0.0277 | 0.0007 | 0.0015 | 0.0005 | 0.0008 | 0.0011 | |
| 51 | Inv. ex. | 0.20 | 0.8 | 2.4 | 0.5 | 0.0018 | 0.0004 | 0.0097 | 0.0014 | 0.0004 | 0.0007 | 0.0008 | |
| 52 | Inv. ex. | 0.20 | 0.8 | 2.5 | 0.7 | 0.0017 | 0.0004 | 0.0011 | 0.0024 | 0.0003 | 0.0007 | 0.0009 | |
| 53 | Inv. ex. | 0.25 | 0.9 | 2.4 | 0.6 | 0.0019 | 0.0004 | 0.0009 | 0.0014 | 0.0089 | 0.0008 | 0.0011 | |
| 54 | Inv. ex. | 0.20 | 0.9 | 2.5 | 0.6 | 0.0017 | 0.0005 | 0.0008 | 0.0014 | 0.0005 | 0.1200 | 0.0010 | |

(continued)

| Table 2 (continuation of Table 1) | | | | | | | | | | | | | |
|---|---|---|---|---|---|---|---|---|---|---|---|---|---|
| Test no. | Class | Chemical composition (mass%), balance: Fe and impurities | | | | | | | | | | | |
| | | C | Si | Mn | sol.Al | P | S | N | O | B | Ti | Nb | Other |
| 55 | Inv. ex. | 0.20 | 0.9 | 2.5 | 0.6 | 0.0017 | 0.0005 | 0.0008 | 0.0014 | 0.0005 | 0.1200 | 0.1100 | |
| * Underlines indicate outside scope of present invention. | | | | | | | | | | | | | |

[Table 3]

Table 3

| Test no. | Class | Pretreatment step | | Annealing step | | | |
|---|---|---|---|---|---|---|---|
| | | Blasted amount (kg/m$^2$) | Surface roughness after pretreatment | Dew point control start temp. (°C) | Dew point (°C) | Holding temp. (°C) | Holding time (s) |
| 1 | Inv. ex. | 5 | A | 300 | 0 | 800 | 40 |
| 2 | Inv. ex. | 5 | A | 400 | 0 | 800 | 45 |
| 3 | Inv. ex. | 5 | A | 450 | 0 | 800 | 60 |
| 4 | Inv. ex. | 5 | A | 500 | 0 | 800 | 60 |
| 5 | Inv. ex. | 20 | A | 500 | 0 | 800 | 60 |
| 6 | Inv. ex. | 45 | A | 500 | 0 | 800 | 50 |
| 7 | Inv. ex. | 50 | AA | 450 | 0 | 820 | 60 |
| 8 | Inv. ex. | 100 | AA | 500 | 0 | 840 | 100 |
| 9 | Inv. ex. | 100 | AA | 550 | 0 | 860 | 100 |
| 10 | Inv. ex. | 100 | AA | 520 | 0 | 860 | 100 |
| 11 | Inv. ex. | 100 | AA | 500 | 0 | 860 | 100 |
| 12 | Inv. ex. | 100 | AA | 500 | 0 | 860 | 100 |
| 13 | Inv. ex. | 100 | AA | 500 | 0 | 860 | 100 |
| 14 | Inv. ex. | 100 | AA | 500 | 0 | 860 | 20 |
| 15 | Inv. ex. | 100 | AA | 500 | 0 | 860 | 100 |
| 16 | Inv. ex. | 100 | AA | 500 | 0 | 860 | 100 |
| 17 | Inv. ex. | 100 | AA | 500 | 0 | 860 | 100 |
| 18 | Inv. ex. | 300 | AA | 500 | 0 | 860 | 100 |
| 19 | Inv. ex. | 100 | AA | 500 | 0 | 860 | 100 |
| 20 | Inv. ex. | 100 | AA | 500 | 0 | 860 | 100 |
| 21 | Inv. ex. | 100 | AA | 500 | 0 | 860 | 100 |
| 22 | Inv. ex. | 100 | AA | 500 | 0 | 860 | 150 |
| 23 | Inv. ex. | 100 | AA | 500 | -20 | 860 | 100 |
| 24 | Inv. ex. | 100 | AA | 500 | 0 | 860 | 100 |
| 25 | Inv. ex. | 100 | AA | 500 | 0 | 860 | 100 |
| 26 | Comp. ex. | 15 | A | 500 | 0 | 820 | 70 |
| 27 | Comp. ex. | 15 | A | 500 | 0 | 820 | 70 |

(continued)

| Test no. | Class | Pretreatment step | | Annealing step | | | |
|---|---|---|---|---|---|---|---|
| | | Blasted amount (kg/m$^2$) | Surface roughness after pretreatment | Dew point control start temp. (°C) | Dew point (°C) | Holding temp. (°C) | Holding time (s) |
| 28 | Comp. ex. | 15 | A | 500 | 0 | 820 | 70 |
| 29 | Comp. ex. | 15 | A | 500 | 0 | 820 | 70 |
| 30 | Comp. ex. | 15 | A | 500 | 0 | 740 | 70 |
| 31 | Comp. ex. | 15 | A | 500 | 0 | 915 | 70 |
| 32 | Comp. ex. | 0 | B | 500 | 0 | 800 | 60 |
| 33 | Comp. ex. | 15 | A | 500 | -35 | 800 | 60 |
| 34 | Comp. ex. | 15 | A | 500 | 25 | 800 | 60 |
| 35 | Comp. ex. | Grinding | A | 500 | 0 | 800 | 60 |
| 36 | Comp. ex. | 15 | A | 250 | 0 | 800 | 60 |
| 37 | Inv. ex. | 100 | AA | 500 | 0 | 860 | 100 |
| 38 | Inv. ex. | 100 | AA | 500 | 0 | 860 | 100 |
| 39 | Inv. ex. | 100 | AA | 450 | 0 | 860 | 100 |
| 40 | Inv. ex. | 100 | AA | 500 | 0 | 860 | 100 |
| 41 | Inv. ex. | 100 | AA | 500 | 0 | 860 | 100 |
| 42 | Inv. ex. | 100 | AA | 500 | 0 | 860 | 100 |
| 43 | Inv. ex. | 100 | AA | 500 | 0 | 860 | 100 |
| 44 | Inv. ex. | 100 | AA | 550 | 0 | 850 | 100 |
| 45 | Inv. ex. | 100 | AA | 500 | 0 | 860 | 100 |
| 46 | Inv. ex. | 100 | AA | 500 | 0 | 860 | 100 |
| 47 | Inv. ex. | 100 | AA | 500 | 0 | 870 | 100 |
| 48 | Inv. ex. | 100 | AA | 500 | 0 | 860 | 100 |
| 49 | Inv. ex. | 100 | AA | 550 | 0 | 860 | 100 |
| 50 | Inv. ex. | 100 | AA | 500 | 0 | 860 | 100 |
| 51 | Inv. ex. | 100 | AA | 500 | 0 | 860 | 100 |
| 52 | Inv. ex. | 100 | AA | 450 | 0 | 860 | 100 |
| 53 | Inv. ex. | 100 | AA | 500 | 0 | 860 | 100 |
| 54 | Inv. ex. | 100 | AA | 500 | 0 | 860 | 100 |
| 55 | Inv. ex. | 100 | AA | 500 | 0 | 860 | 100 |
| * Underlines indicate outside scope of present invention. | | | | | | | |

(Surface Roughness After Pretreatment)

The "surface roughness after pretreatment" described in Table 3 is determined by measuring the surface roughness Ra of the steel sheet after the pretreatment step and before the annealing step based on JIS B 0601: 2013.
Evaluation AA: 3.5 $\mu$m or more
Evaluation A: more than 3.0 $\mu$m and less than 3.5 $\mu$m
Evaluation B: 3.0 $\mu$m or less

A welded joint produced by spot welding was evaluated in the following way.

(First Region)

Using the above-mentioned method, the hardness of the example steel sheet was measured in the first region of the welded joint. The hardness of the steel sheet was measured at the 1/2 depth of the example steel sheet based on JIS Z 2244: 2009. The measurement load was made 200 gf. The hardness was evaluated as follows:
Evaluation AAA: 340 Hv or more
Evaluation AA: 270 Hv or more and less than 340 Hv
Evaluation A: 200 Hv or more and less than 270 Hv

Further, the surface roughness Ra of the surface of the steel sheet in the steel sheet which has not been plated and the base material steel sheet from which plating is removed to expose it in steel sheet which has been plated was measured by a similar method as before annealing. The plating was removed by dissolving the plating layer in a 10 mass% hydrochloric acid solution to which 0.06 mass% inhibitor (ibit 710K made by Asahi Chemical Co., Ltd.) for suppressing corrosion of the base material steel sheet has been added.
Further, a sample cut to 30 mm×30 mm was taken from the first region of the welded joint and measured by GDS by the above-mentioned method five times in the sheet thickness direction to find the depth with a C concentration of 0.02% or less. The "C≤0.02% depth" in Table 4 is the mean value of the depths with a C concentration of 0.02% or less found by GDS measurement five times.
Further, a sample cut to 20 mm×20 mm was taken and, using an incidence angle of the X-rays of 1°, the X-ray diffraction intensity I(110) of an incidence angle of 1° from the steel sheet surface of the (110) plane, the X-ray diffraction intensity I(200) of an incidence angle of 1° from the steel sheet surface of the (200) plane, and the X-ray diffraction intensity I(211) of an incidence angle of 1° from the steel sheet surface of the (211) plane were measured. The "grazing incidence XRD" in Table 4 means the value of I(110) / ( I(110) + I(200) + I(211) ). In steel sheet which has been plated, in the same way as above, the plating layer was dissolved in a 10 mass% hydrochloric acid solution to which a 0.06 mass% inhibitor suppressing corrosion of the base material steel sheet (ibit 710K made by Asahi Chemical Co., Ltd.) has been added so as to remove the plating layer, then the grazing incidence X-ray diffraction intensity was measured.

(Second Region)

A sample cut to 25 mmx 15 mm was taken from the second region of the welded joint, was etched by a Nital reagent, was examined by SEM for the T section of each sample, and the thickness with an area ratio of the ferrite phase of 90% or more (high ferrite layer) was measured. The thickness was measured at five points at equal intervals in the T direction over a range of 500 $\mu$m and the average value was taken. Here, the starting point of the "thickness" was the surface of the steel sheet in the case of steel sheet which was not plated and the interface of the plating layer and base material steel sheet in the case of steel sheet which has been plated.

(LME Resistance)

Referring to FIG. 4, the method of evaluation of the LME resistance will be explained. The LME resistance was evaluated by overlaying two steel sheets 1 and spot welding them, then determining the length of an LME crack (crack 11 right outside pressure contact zone) formed right outside the pressure contact zone of the spot welded part 2 formed. The "two steel sheets 1" are the steel sheet of each test number (test no.) and its counterpart material steel sheet. The "right outside the pressure contact zone of the welded part" means a position at the overlaid surfaces of the two steel sheets at the part pressure contacted by spot welding as the part at the outside of the pressure contact zone 6 and near the pressure contact zone 6 (range from end part of pressure contact zone 6 to 1 mm or so to the outside). The crack 11 right outside of the pressure contact zone was evaluated for the length of the crack. Note that the test by spot welding was performed three times and the sample with the longest length of the crack of the crack 11 right outside the pressure contact zone was evaluated. The evaluation criteria were as follows. In the present embodiment, if the evaluation A or more (that is, evaluation A, AA, AAA), it was judged that the LME resistance was excellent.
Evaluation AAA: 0 $\mu$m

Evaluation AA: more than 0 $\mu$m and less than 60 $\mu$m

Evaluation A: 60 $\mu$m or more and less than 120 $\mu$m

Evaluation B: 120 $\mu$m or more

The results of the evaluations are shown in Table 4.

[Table 4]

Table 4

| Test no. | Class | Plating type | Nonheat affected zone | | | | Heat affected zone | Performance | Counterpart material |
|---|---|---|---|---|---|---|---|---|---|
| | | | Hardness | Surface roughness Ra ($\mu$m) | C≤0.02% depth ($\mu$m) | Glancing angle XRD (value of middle term of conditional expression) | High ferrite layer thickness ($\mu$m) | LME resistance | |
| 1 | Inv. ex. | a | A | 3.2 | 8 | 0.90 | 15 | A | Same type |
| 2 | Inv. ex. | Unplated | A | 3.1 | 8 | 0.82 | 17 | A | GI270IF |
| 3 | Inv. ex. | b | AA | 3.3 | 8 | 0.75 | 15 | AA | Same type |
| 4 | Inv. ex. | b | AA | 3.1 | 10 | 0.72 | 17 | AAA | Same type |
| 5 | Inv. ex. | b | AA | 3.2 | 13 | 0.70 | 18 | AAA | Unplated, same type |
| 6 | Inv. ex. | b | AA | 3.1 | 15 | 0.72 | 15 | AAA | Same type |
| 7 | Inv. ex. | b | AA | 3.8 | 16 | 0.70 | 15 | AAA | Same type |
| 8 | Inv. ex. | b | AA | 3.8 | 23 | 0.69 | 20 | AAA | Same type |
| 9 | Inv. ex. | b | AA | 3.7 | 25 | 0.68 | 22 | AAA | Same type |
| 10 | Inv. ex. | b | AA | 3.9 | 22 | 0.67 | 23 | AAA | Same type |
| 11 | Inv. ex. | c | AA | 3.8 | 23 | 0.66 | 24 | AAA | Same type |
| 12 | Inv. ex. | b | AA | 3.7 | 21 | 0.65 | 25 | AAA | Same type |
| 13 | Inv. ex. | b | AA | 3.7 | 22 | 0.67 | 26 | AAA | Same type |
| 14 | Inv. ex. | b | AA | 3.6 | 9 | 0.63 | 15 | AA | Same type |
| 15 | Inv. ex. | b | AA | 3.8 | 22 | 0.67 | 22 | AAA | GA590 |
| 16 | Inv. ex. | b | AAA | 3.9 | 22 | 0.66 | 23 | AAA | Same type |
| 17 | Inv. ex. | Unplated | AAA | 3.6 | 22 | 0.64 | 25 | AAA | GA, same type |
| 18 | Inv. ex. | b | AAA | 3.2 | 40 | 0.66 | 25 | AAA | Same type |
| 19 | Inv. ex. | b | AAA | 3.8 | 22 | 0.66 | 27 | AAA | Same type |
| 20 | Inv. ex. | b | AAA | 3.7 | 23 | 0.65 | 28 | AAA | Same type |

| Test no. | Class | Plating type | Nonheat affected zone | | | | Heat affected zone | Performance | Counterpart material |
|---|---|---|---|---|---|---|---|---|---|
| | | | Hardness | Surface roughness Ra ($\mu$m) | C≤0.02% depth ($\mu$m) | Glancing angle XRD (value of middle term of conditional expression) | High ferrite layer thickness ($\mu$m) | LME resistance | |
| 21 | Inv. ex. | b | AAA | 3.6 | 22 | 0.67 | 26 | AA | Same type |
| 22 | Inv. ex. | b | AAA | 3.7 | 29 | 0.69 | 28 | AAA | Same type |
| 23 | Inv. ex. | Unplated | AAA | 3.8 | 22 | 0.67 | 24 | AAA | GA, same type |
| 24 | Inv. ex. | c | AAA | 3.9 | 22 | 0.65 | 29 | AAA | Same type |
| 25 | Inv. ex. | b | AAA | 3.8 | 22 | 0.65 | 26 | AAA | Same type |
| 26 | Comp. ex. | b | AAA | 3.2 | 1 | 0.83 | 4 | B | Same type |
| 27 | Comp. ex. | b | AA | 3.1 | 1 | 0.83 | 3 | B | Same type |
| 28 | Comp. ex. | b | AA | 3.4 | 2 | 0.82 | 3 | B | Same type |
| 29 | Comp. ex. | b | AA | 3.1 | 1 | 0.81 | 3 | B | Same type |
| 30 | Comp. ex. | b | AA | 3.1 | 2 | 0.82 | 2 | B | Same type |
| 31 | Comp. ex. | b | AA | 3.2 | 1 | 0.81 | 6 | B | Same type |
| 32 | Comp. ex. | b | AA | 0.5 | 2 | 0.93 | 4 | B | Same type |
| 33 | Comp. ex. | b | AA | 3.1 | 2 | 0.79 | 3 | B | Same type |
| 34 | Comp. ex. | b | AA | 3.3 | 2 | 0.82 | 2 | B | Same type |
| 35 | Comp. ex. | b | AA | 2.4 | 9 | 0.92 | 4 | B | Same type |
| 36 | Comp. ex. | b | AA | 3.1 | 2 | 0.96 | 4 | B | Same type |
| 37 | Inv. ex. | b | AA | 3.6 | 15 | 0.64 | 21 | AAA | Same type |
| 38 | Inv. ex. | b | AA | 3.5 | 16 | 0.62 | 23 | AAA | Same type |
| 39 | Inv.ex. | b | AA | 3.7 | 15 | 0.62 | 22 | AAA | Same type |
| 40 | Inv. ex. | b | AA | 3.6 | 17 | 0.61 | 21 | AAA | Same type |
| 41 | Inv. ex. | b | AA | 3.8 | 15 | 0.66 | 20 | AAA | Same type |
| 42 | Inv. ex. | b | AA | 3.5 | 15 | 0.63 | 21 | AAA | Same type |

(continued)

| Test no. | Class | Plating type | Nonheat affected zone | | | | Heat affected zone | Performance | Counterpart material |
|---|---|---|---|---|---|---|---|---|---|
| | | | Hardness | Surface roughness Ra ($\mu$m) | C≤0.02% depth ($\mu$m) | Glancing angle XRD (value of middle term of conditional expression) | High ferrite layer thickness ($\mu$m) | LME resistance | |
| 43 | Inv. ex. | b | AA | 3.6 | 16 | 0.65 | 23 | AAA | Same type |
| 44 | Inv. ex. | b | AA | 3.6 | 16 | 0.66 | 24 | AAA | Same type |
| 45 | Inv. ex. | b | AA | 3.7 | 15 | 0.65 | 21 | AAA | Same type |
| 46 | Inv. ex. | b | AA | 3.5 | 17 | 0.64 | 20 | AAA | Same type |
| 47 | Inv. ex. | b | AA | 3.7 | 21 | 0.63 | 26 | AAA | Same type |
| 48 | Inv. ex. | b | AA | 3.6 | 15 | 0.65 | 22 | AAA | Same type |
| 49 | Inv. ex. | b | AA | 3.8 | 15 | 0.64 | 21 | AAA | Same type |
| 50 | Inv. ex. | b | AA | 3.5 | 16 | 0.66 | 20 | AAA | Same type |
| 51 | Inv. ex. | b | AA | 3.6 | 16 | 0.66 | 22 | AAA | Same type |
| 52 | Inv. ex. | b | AA | 3.6 | 15 | 0.64 | 20 | AAA | Same type |
| 53 | Inv. ex. | b | AA | 3.7 | 17 | 0.65 | 23 | AAA | Same type |
| 54 | Inv. ex. | b | AA | 3.5 | 18 | 0.66 | 21 | AAA | Same type |
| 55 | Inv. ex. | b | AA | 3.5 | 18 | 0.66 | 21 | AAA | Same type |

* Underlines indicate outside scope of present invention or desired properties not obtained.

Test Nos. 1 to 25 and 37 to 55 were examples of the present invention and had high LME resistances.

In Test No. 32, grit blasting was not performed, therefore strain was not introduced into the surface layer. For this reason, it is believed that at the time of annealing of the steel sheet, decarburization was not promoted, the depth with a C concentration of 0.02% or less measured by GDS became shallower, and the thickness with a ferrite phase of 90% or more became smaller. Further, it is believed that internal oxidation of Si or Mn did not proceed and the orientation of the ferrite phase did not become randomized. As a result, the LME resistance at the time of production of a welded joint became inferior.

In Test No. 35, instead of grit blasting treatment, pretreatment was performed by grinding using brush rolls, therefore strain was not introduced into the surface layer. Therefore, it is believed that the thickness with a ferrite phase of 90% or more became smaller. Further, it is believed that internal oxidation of Si or Mn did not proceed and the orientation of the ferrite phase did not become randomized. As a result, LME inhibition at the time of production of a welded joint became inferior.

In Test No. 36, the dew point control start temperature at the annealing step was low, therefore it is believed external oxidation proceeded, decarburization did not proceed, and the depth with a C concentration of 0.02% or less by GDS measurement became shallower. Further, it is believed that internal oxidation of Si or Mn did not proceed and the orientation of the ferrite phase did not become randomized. As a result, LME inhibition at the time of production of a welded joint became inferior.

[INDUSTRIAL APPLICABILITY]

According to the present invention, it becomes possible to provide a welded joint suppressing LME at the time of production. That welded joint can be optimally used for automobiles, household electric appliance products, building materials, and other applications, in particular for automobile use. Therefore, the present invention is an invention with an extremely high industrial applicability.

REFERENCE SIGNS LIST

1 steel sheet
2 spot welded part
3 indentation part
4 weld shoulder
4a outer end of weld shoulder
5 nugget
6 pressure contact zone
11 cracking right outside pressure contact zone
21 first region
22 second region

**Claims**

1. A welded joint comprising

a plurality of steel sheets which are overlaid and
a spot welded part joining the plurality of steel sheets,
wherein
the spot welded part has a nugget, an indentation part squeezed by electrodes, and a weld shoulder part which is a periphery part of the indentation part,
at least one of the steel sheets among the plurality of steel sheets is a plated steel sheet having a plating layer comprising Zn formed on at least the surface corresponding to an overlaid surface of the plurality of steel sheets,
at least one of the steel sheets forming the overlaid surface among the plurality of steel sheets is a high strength steel sheet having a hardness of 200 Hv or more at a first region which is a surface layer region at 5 mm or more away from an outer end of the nugget toward the outer side of the nugget in the directions of spread of the sheet surface of the steel sheet,
a chemical composition of the high strength steel sheet comprises, by mass%,
C: 0.05 to 0.40%,

Si: 0.5 to 3.0%,
Mn: 0.1 to 5.0%,
sol.Al: 0 to 3.0%,
P: 0.0300% or less,
S: 0.0300% or less,
N: 0.0100% or less,
B: 0 to 0.0100%,
Ti: 0 to 0.1500%,
Nb: 0 to 0.150%,
V: 0 to 0.150%,
Cr: 0 to 2.00%,
Ni: 0 to 2.00%,
Cu: 0 to 2.0000%,
Mo: 0 to 1.00%,
W: 0 to 1.000%,
Ca: 0 to 0.1000%,
Mg: 0 to 0.100%,
Zr: 0 to 0.100%,
Hf: 0 to 0.100%,
REM: 0 to 0.1000% and
a balance comprising Fe and impurities;
in the first region,
a surface roughness Ra of the high strength steel sheet is more than 3.0 $\mu$m,
a depth in a thickness direction from the surface of the high strength steel sheet wherein a C concentration is 0.02% or less is 8 $\mu$m or more,
in grazing incidence X-ray diffraction with a incidence angle of 1° with respect to the surface of the high strength steel sheet,

$$0.45 \leq I(110) / ( I(110) + I(200) + I(211) ) \leq 0.90$$

is satisfied, when I(110) denotes a diffraction intensity corresponding to the (110) plane, I(200) denotes a diffraction intensity corresponding to the (200) plane, and I(211) denotes a diffraction intensity corresponding to the (211) plane; and
in a second region which is a surface layer region at a distance of 0 to 100 $\mu$m away from the weld shoulder part toward the outside of the spot welded part in the directions of spread of the sheet surface of the high strength steel sheet,
a thickness in a thickness direction from the surface of the high strength steel sheet of a layer having an area ratio of ferrite of 90% or more is 15 $\mu$m or more,
where, when the steel sheet is the plated steel sheet, the surface of the steel sheet is deemed to be the interface of the steel sheet and the plating layer of the plated steel sheet.

2. The welded joint according to claim 1, wherein, in the first region, $0.50 \leq I(110) / ( I(110) + I(200) + I(211) ) \leq 0.75$ is satisfied.

3. The welded joint according to claim 1, wherein, in the first region, the depth with a C concentration of 0.02% or less is 15 $\mu$m or more.

4. The welded joint according to claim 1, wherein, in the first region, the surface roughness Ra is 3.5 $\mu$m or more.

5. The welded joint according to claim 1, wherein, in the second region, the thickness of a layer with an area ratio of ferrite of 90% or less is 20 $\mu$m or more.

6. A joined structure of an automobile member comprised of a welded joint according to any one of claims 1 to 5 joining automobile members comprised of a plurality of steel sheets used as automobile members.

# Fig. 1

# Fig. 2

(a)                                                                        (b)

# Fig. 3

FERRITE PHASE

60 μm

# Fig. 4

## INTERNATIONAL SEARCH REPORT

| International application No. |
|---|
| **PCT/JP2024/025325** |

**A. CLASSIFICATION OF SUBJECT MATTER**

*C22C 38/00*(2006.01)i; *B23K 11/16*(2006.01)i; *C21D 9/46*(2006.01)i; *C22C 38/58*(2006.01)i
FI: C22C38/00 301Z; C22C38/00 301U; C22C38/00 301T; C22C38/58; B23K11/16 311; C21D9/46 F; C21D9/46 J

According to International Patent Classification (IPC) or to both national classification and IPC

**B. FIELDS SEARCHED**

Minimum documentation searched (classification system followed by classification symbols)

C22C38/00-38/60; B23K11/16; C21D9/46-9/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/131671 A1 (POSCO) 23 June 2022 (2022-06-23)<br>claims, paragraphs [0046]-[0049], tables 1-3 | 1-6 |
| A | JP 2022-514847 A (POSCO) 16 February 2022 (2022-02-16)<br>claims | 1-6 |
| A | WO 2022/149505 A1 (NIPPON STEEL CORPORATION) 14 July 2022 (2022-07-14)<br>claims | 1-6 |
| P, A | WO 2024/053669 A1 (NIPPON STEEL CORPORATION) 14 March 2024 (2024-03-14)<br>claims | 1-6 |
| E, A | WO 2024/150820 A1 (NIPPON STEEL CORPORATION) 18 July 2024 (2024-07-18)<br>claims, paragraphs [0091]-[0097] | 1-6 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **04 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

### INTERNATIONAL SEARCH REPORT
**Information on patent family members**

International application No.

**PCT/JP2024/025325**

| Patent document cited in search report | | | Publication date (day/month/year) | Patent family member(s) | | | Publication date (day/month/year) |
|---|---|---|---|---|---|---|---|
| WO | 2022/131671 | A1 | 23 June 2022 | EP | 4265808 | A1 | |
| | | | | claims, paragraphs [0020]-[0021], tables 1-3 | | | |
| | | | | US | 2024/0043954 | A1 | |
| | | | | CN | 116648525 | A | |
| | | | | JP | 2024-500725 | A | |
| JP | 2022-514847 | A | 16 February 2022 | EP | 3901318 | A1 | |
| | | | | claims | | | |
| | | | | US | 2022/0042155 | A1 | |
| | | | | CN | 113227434 | A | |
| | | | | WO | 2020/130631 | A1 | |
| WO | 2022/149505 | A1 | 14 July 2022 | EP | 4276215 | A1 | |
| | | | | claims | | | |
| | | | | US | 2024/0058888 | A1 | |
| | | | | CN | 116723908 | A | |
| | | | | KR | 10-2023-0110807 | A | |
| WO | 2024/053669 | A1 | 14 March 2024 | (Family: none) | | | |
| WO | 2024/150820 | A1 | 18 July 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019116531 A

- WO 2020218575 A